# EUROPÄISCHE PATENTSCHRIFT

(11) **EP 2 542 854 B1**
(45) Veröffentlichungstag und Bekanntmachung des Hinweises auf die Patenterteilung: **08.06.2022**
(21) Anmeldenummer: 11707598.6
(22) Anmeldetag: 04.03.2011
(51) Int. Cl.: G01B 11/00, G01B 11/03, G01B 11/24, G01B 21/04

(54) **VORRICHTUNG ZUM VERMESSEN UND/ODER EINSTELLEN EINES WERKZEUGS**
DEVICE FOR MEASURING AND/OR ADJUSTING A TOOL
DISPOSITIF PERMETTANT DE MESURER ET/OU DE RÉGLER UN OUTIL

(30) Priorität: 04.03.2010 DE 202010003152 U
(43) Veröffentlichungstag der Anmeldung: 09.01.2013
(73) Patentinhaber: HAIMER Microset GmbH, 33689 Bielefeld (DE)
(72) Erfinder: BUTTAU, Dieter, 74379 Ingersheim (DE)
(74) Vertreter: Schwarz, Wolfgang
(86) Internationale Anmeldenummer: PCT/EP2011/001082
(87) Internationale Veröffentlichungsnummer: WO 2011/107287

(56) Entgegenhaltungen:
- EP-A1- 2 158 999
- DE-A1- 3 743 717
- DE-A1-102004 055 602
- DE-U1-202008 005 750
- DE-U1-202008 005 750
- US-A- 4 453 085
- US-A- 4 833 630

## Beschreibung

Die vorliegende Erfindung betrifft eine Vorrichtung zum Vermessen und/oder Einstellen eines Werkzeugs gemäß dem Oberbegriff des Anspruchs 1.

Solche Vorrichtungen erlauben die Voreinstellung und Vermessung eines Werkzeugs vor seinem Einsatz in einer Bearbeitungsmaschine. Das Werkzeug wird hierzu in einem Werkzeughalter eingesetzt und mit Hilfe einer Kamera optisch vermessen. In einer sehr verbreiteten Ausführungsform von Werkzeugeinstellgeräten befindet die Kamera sich in einem Messkopf an einem Schlitten, der in einer Raumebene verfahrbar ist. Die Positionen des Schlittens in der Raumebene werden durch geeignete Messaufnehmer aufgenommen, so dass die augenblickliche Position des Messkopfes exakt bestimmt und mit der Abbildung des Werkzeugs in Beziehung gesetzt werden kann.

Die Messgenauigkeit ist bei diesen Systemen durch die Stabilität der Führung des Messkopfes begrenzt. Nachteilig sind daher das hohe Gewicht und die daraus folgenden hohen Kosten solcher Geräte.

Es wurden daher Versuche unternommen, die Messkopfposition auf andere Weise zu bestimmen. Das deutsche Gebrauchsmuster 20 2008 011 332, das hier als nächstliegender Stand der Technik betrachtet wird, offenbart ein Werkzeugvoreinstellgerät, bei welchem der Messkopf außer der Kamera zur Aufnahme des Werkzeugs eine weitere Kamera als Positionsaufnehmer umfasst. Diese zweite Kamera ist auf eine Referenzplatte gerichtet, die in einer Referenzebene parallel zu der Raumebene steht, in der sich der Messkopf bewegt. Die Referenzplatte ist mit Markierungen versehen, die durch die zweite Kamera aufgenommen werden können. Bei einer Bewegung des Messkopfes parallel zur Referenzplatte lässt sich seine Position aus einer Abbildung der Markierungen durch die zweite Kamera ermitteln.

EP 2 158 999 A1 offenbart eine Vorrichtung zum Vermessen und/oder Einstellen eines Werkzeugs, bei welchem ein Messkopf vor einer Referenzebene beweglich ist, wobei ein zu vermessendes Werkzeug zwischen dem Messkopf und der Referenzebene angeordnet ist.

Dokument DE 37 43 717 A1 zeigt eine einschlägige Messvorrichtung, bei welcher ein Messkopf, der eine Messkamera trägt, entlang einer Schiene verfahrbar ist.

US 4 833 630 A offenbart einen auf einer Referenzebene gleitend gelagerten Messkopf, wobei die Referenzebene elektronische Mittel zur Ermittlung der Position des Messkopfes aufweist.

In dem System, das in dem vorstehend genannten Gebrauchsmuster beschrieben wird, wird der Messkopf von einem mehrgliedrigen Arm getragen, dessen Glieder durch Gelenke verbunden sind. Obwohl die Anforderungen an die Stabilität dieses Arms generell nicht so hoch sind wie bei dem eingangs beschriebenen herkömmlichen Schlittensystem, führen die statischen Anforderungen für die Messkopfaufhängung dennoch zu vergleichweise hohen Kosten. Es ist daher erwünscht, dieses System weiter zu vereinfachen und ohne Einbußen an Messgenauigkeit so weit wie möglich auf tragende Teile zu verzichten. Vielmehr soll die Erfassungsgenauigkeit der Position des Messkopfes noch weiter erhöht werden.

Aufgabe der vorliegenden Erfindung ist es daher, die vorstehend genannte Vorrichtung zum Vermessen und/oder Einstellen eines Werkzeugs dahingehend zu verbessern, dass bei gleichbleibender oder erhöhter Erfassungsgenauigkeit der Position des Messkopfes das Gewicht und die Kosten des Aufbaus gesenkt werden.

Diese Aufgabe wird erfindungsgemäß durch eine Vorrichtung mit den Merkmalen des Anspruchs 1 gelöst.

Der Messkopf der erfindungsgemäßen Vorrichtung ist auf einer Oberfläche der Referenzplatte gleitend gelagert. Die Referenzplatte, die den räumlichen Bezug zur Ermittlung der Messkopfposition bildet, wird in diesem Fall also gleichzeitig zur Messkopflagerung genutzt. Dies bietet den Vorteil, dass auf die bekannten mechanischen Führungen oder Aufhängungen des Messkopfes, wie etwa einen mehrgliedrigen Arm, ein X-Y-Schienensystem zur Führung eines den Messkopf tragenden Schlittens oder dergleichen prinzipiell verzichtet werden kann. Vielmehr kann der Messkopf mit äußerst geringem Kraftaufwand frei über die Referenzplatte geführt werden.

Die Führung des Messkopfes kann beispielsweise von Hand erfolgen, oder der Messkopf kann über einen eigenen Antrieb verfügen. Die Ermittlung der Messkopfposition bezüglich der Plattenoberfläche ist erfindungsgemäß weniger fehlerbehaftet, und trotz des Verzichts auf Aufhängungskomponenten, die nach dem Stand der Technik bekannt sind, wird die Messgenauigkeit erhöht.

Die gleitende Lagerung des Messkopfes auf der Oberfläche der Referenzplatte erfolgt vorteilhafterweise berührungslos, so dass der Messkopf in geringem Abstand über die Plattenoberfläche beweglich ist. Für eine derartige Lagerung bestehen verschiedene Möglichkeiten.

Gemäß einer bevorzugten Ausführungsform der Erfindung ist der Messkopf auf einem Luftpolster auf der Referenzplatte gelagert.

Die Referenzplatte kann in diesem Fall mit Mikrodüsen versehen sein, denen Luft entströmt, die das Luftpolster unterhalb des Messkopfes bildet.

Gemäß einer weiteren bevorzugten Ausführungsform ist die Referenzplatte im wesentlichen horizontal angeordnet, und der Messkopf steht auf der Oberseite der Referenzplatte bzw. dem darauf ausgebildeten Luftpolster.

Die Referenzplatte bildet also eine Art Tisch und ist vorteilhafterweise an den Plattenrändern mit Begrenzungen für die Bewegung des Messkopfes versehen. Auf diesem Messtisch kann der Messkopf kann frei verfahren werden.

Vorzugsweise ist der Messkopf etwa säulenförmig ausgebildet und umfasst einen auf der Oberfläche der Referenzplatte gleitenden Fuß, und die optische Achse der ersten Kamera steht etwa senkrecht zur Oberfläche der Referenzplatte.

Gemäß einer Ausführungsform der Erfindung ist der Messkopf von Hand über die Referenzplatte führbar.

Gemäß einer weiteren Ausführungsform verfügt der Messkopf über einen eigenen Antrieb zur Bewegung über die Referenzplatte hinweg.

Dieser Antrieb kann vorzugsweise als Friktionsantrieb ausgebildet sein, der an der Unterseite des Messkopfes vorgesehen ist.

Gemäß einer bevorzugten Ausführungsform umfasst die erfindungsgemäße Vorrichtung eine Fernsteuerung zum Führen des Messkopfes über die Referenzplatte, die eine manuelle Steuereinrichtung zur Eingabe von Steuerbefehlen und Mittel zur Übermittlung der Steuerbefehle an den Messkopf umfasst. Diese Übermittlung kann wahlweise drahtlos oder kabelgebunden erfolgen.

Die Referenzplatte weist optische Markierungen auf, und der Positionsaufnehmer ist als zweite Kamera zur Aufnahme der optischen Markierungen ausgebildet.

Diese zweite Kamera kann beispielsweise innerhalb der Säule des Messkopfes vorhanden sein und bildet die Markierungen der Referenzplatte ab. Die Markierungen können hierbei so ausgebildet sein, dass sich die absolute Position des Messkopfes in der Raumebene, in der er beweglich ist, aus jeder Abbildung der zweiten Kamera ermitteln lässt, ohne dass ein Vergleich mit vorhergehenden Abbildungen erforderlich ist. Das heißt, die optischen Markierungen sind derart gestaltet, dass jedes Kamerabild genügend Informationen zur Positionsermittlung enthält.

Vorzugsweise ist die zweite Kamera zur Abbildung der optischen Markierungen im Durchlichtverfahren vorgesehen.

In dieser Ausführungsform ist hinter der Referenzplatte, d. h. auf der Seite, die dem Messkopf gegenüberliegt, eine Lichtquelle vorgesehen, die die Referenzplatte durchleuchtet.

Die zweite Kamera ist ferner vorzugsweise dazu vorgesehen, eine Drehposition des Messkopfes innerhalb der Raumebene anhand der optischen Markierungen der Referenzplatte zu ermitteln.

Die Ermittlung der Winkelposition des Messkopfes kann beispielsweise durch Ermittlung eines Neigungswinkels eines Linienmusters der optischen Markierungen der Referenzplatte erfolgen. Das Bildverarbeitungssystem der Vorrichtung erkennt also automatisch die Drehposition des Messkopfes und verwertet diese entsprechend, so dass bei der Positionierung nicht auf die Winkelgenauigkeit geachtet werden muss.

Vorzugsweise umfasst die Referenzplatte zumindest zwei aufeinandergeschichtete Teilplatten, nämlich eine Markierungsplatte, die die optischen Markierungen trägt, und eine transparente Schutzplatte, die die Markierungsplatte abdeckt.

Die beiden Teilplatten können unmittelbar aufeinanderliegen oder parallel mit einem kleinen Luftspalt dazwischen angeordnet sein. Die optischen Markierungen der Markierungsplatte werden durch die Schutzplatte geschützt. Beide Platten können beispielsweise aus Glas gefertigt sein.

Gemäß einer weiteren bevorzugten Ausführungsform der Erfindung umfasst der Messkopf einen Richtungsgeber zur Absolutmessung seiner Drehwinkelposition umfasst. Dieser kann beispielsweise als digitaler Kompass ausgebildet sein und ein Magnetometer umfassen. Ein zusätzlicher Richtungsgeber bietet den Vorteil, die Drehwinkelposition sehr schnell zu erfassen und eine entsprechende Information an den Anwender weitergeben zu können, zum Beispiel mit Hilfe einer optischen Anzeige auf einem Bildschirm. Die Orientierung des Messkopfes wird hierdurch erleichtert.

Gemäß einer weiteren bevorzugten Ausführungsform der Erfindung ist der Messkopf als Läufer eines planaren Reluktanzmotors ausgebildet, und die Referenzplatte bildet die Statorplatte dieses Reluktanzmotors.

In diesem Fall verfügt der Messkopf über einen eigenen Antrieb, vorzugsweise in zwei zueinander senkrechten Raumrichtungen innerhalb der Bewegungsebene des Messkopfes. Derartige Planarmotoren sind mit hoher Genauigkeit verfahrbar, beispielsweise als Schrittmotoren, bei denen die Schrittgenauigkeit von der Feinheit der Zahnung auf der Oberfläche der Statorplatte abhängt.

Vorzugsweise umfasst die Vorrichtung ferner eine dritte Kamera, die im Messkopf höhenverstellbar über der Referenzplatte angeordnet ist.

Diese dritte Kamera dient dazu, das Werkzeug seitlich im Auflichtverfahren abzubilden und somit seine Drehmitte zu ermitteln.

Im folgenden wird eine bevorzugte Ausführungsform der Erfindung anhand der Zeichnung näher erläutert.
- Fig. 1: ist eine Seitenansicht einer Ausführungsform der erfindungsgemäßen Vorrichtung zum Vermessen und/oder Einstellen eines Werkzeugs, in welcher der Werkzeughalter in Draufsicht zu erkennen ist;
- Fig. 2: ist eine weitere Seitenansicht der Vorrichtung aus Fig. 1, aus einem Blickwinkel senkrecht zur Blickrichtung in Fig. 1 mit dem Werkzeughalter in Seitenansicht;
- Fig. 3: ist eine perspektivische Ansicht dieser Ausführungsform der erfindungsgemäßen Vorrichtung;
- Fig. 4: ist eine Draufsicht auf die vorliegende Ausführungsform der erfindungsgemäßen Vorrichtung; und
- Fig. 5: ist eine schematische Darstellung des Schichtaufbaus einer Referenzplatte der vorliegenden Ausführungsform der erfindungsgemäßen Vorrichtung.

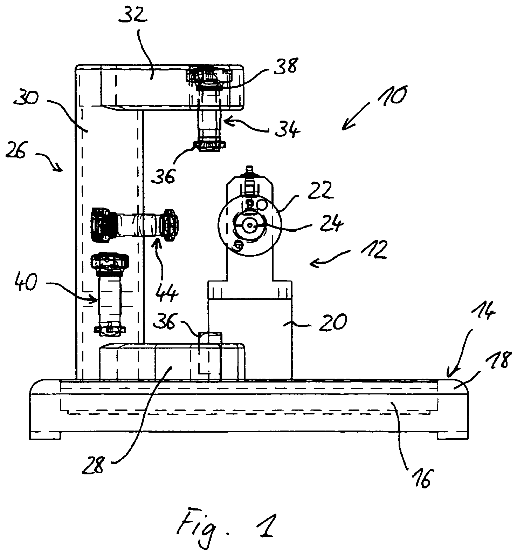

Fig. 1 ist eine Seitenansicht einer Vorrichtung 10 zum Vermessen und/oder Einstellen eines Werkzeugs. Das Werkzeug selbst ist nicht näher dargestellt. Ein Werkzeughalter 12 ist dazu vorgesehen, das Werkzeug aufzunehmen und einzuspannen, damit es in der aufgenommenen und eingespannten Position vermessen bzw. eingestellt werden kann.

Der Werkzeughalter 12 befindet sich auf einem Tisch 14, der eine Basis der gesamten Vorrichtung 10 bildet. In den Tisch 14 ist eine in Fig. 1 nicht näher dargestellte, jedoch durch gestrichelte Linien angedeutete Referenzplatte 16 horizontal einliegend gelagert. Diese Referenzplatte 16 ist rechteckig und wird von einem ebenfalls rechteckigen Rahmen 18 des Tisches 14 seitlich umgrenzt.

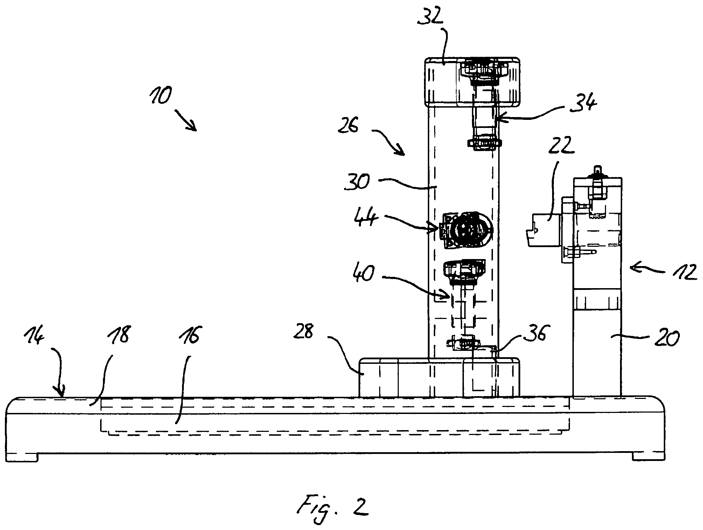

Der Werkzeughalter 12 umfasst eine auf dem Tisch 14 benachbart zur freien Fläche der Referenzplatte 16 aufragende Säule 20. Am oberen Ende der Säule 20 ist seitlich eine Werkzeugaufnahme 22 angebracht, deren Aufnahmeöffnung 24 zur Seite der Referenzplatte 16 weist. Das Werkzeug kann somit seitlich in die freie Öffnung 24 eingesetzt und in der Aufnahme 22 in üblicher Weise eingespannt werden, so dass es sich frei über der Referenzplatte 16 befindet. Die Anordnung des Werkzeughalters 12 mit der Aufnahme 22 am Tisch 14 benachbart zur Referenzplatte ist in Fig. 2 deutlich erkennbar.

Die Säule 20 kann so gestaltet sein, dass sie um ihre senkrechte Säulenachse schwenkbar ist, insbesondere in Richtung einer vor dem Tisch 14 stehenden Bedienungsperson, so dass die Aufnahme 22 besser zugänglich ist und die Handhabung des Werkzeughalters 12 erleichtert wird. Denkbar sind auch Einrichtungen zum automatischen Wechseln des Werkzeugs sowie ein Magazin, das eine Anzahl von Werkzeugen aufnimmt. Dieses Magazin kann in einem Gehäuse unter dem Tisch 14 verborgen sein.

Die Vorrichtung 10 umfasst ferner einen Messkopf 26, der säulenförmig ausgebildet ist und auf dem Tisch 14 aufragt. Im einzelnen umfasst der Messkopf 26 einen Fuß 28, eine seitlich am Fuß 28 aufragende Säule 30 und einen seitlich vom oberen Ende der Säule 30 auskragenden Ausleger 32, der sich oberhalb des Fußes 28 befindet. In den Ausleger 32 ist eine erste Kamera 34 montiert, die nach unten gerichtet ist, so dass ihre optische Achse parallel zur Achse der Säule 30 verläuft. In den Fuß 28 ist eine Lichtquelle 36 integriert, die nach oben in Richtung der ersten Kamera 34 gerichtet ist und sich auf deren optischer Achse befindet. Ein Gegenstand, der zwischen dem Fuß 28 und dem Ausleger 32 etwa auf der optischen Achse der ersten Kamera 34 platziert wird, kann somit durch die erste Kamera 34 im Durchlichtverfahren abgebildet werden. Die Kamera 34 ist zu diesem Zweck in üblicher Weise mit einer Optik, bestehend aus einem Objektiv 36 am unteren Kameraende und einem optischen Sensor 38 ausgerüstet, auf welchem die Abbildung erzeugt wird. Die erzeugte Abbildung wird durch ein entsprechendes Bildverarbeitungssystem verwertet.

Es versteht sich, dass es im Rahmen der vorliegenden Erfindung möglich ist, die Positionen der ersten Kamera 34 und der Lichtquelle 36 zu vertauschen, so dass die erste Kamera 34 im Fuß 28 angeordnet ist und die Lichtquelle 36 im Ausleger 32.

Während das zu vermessende Werkzeug im Werkzeughalter 12 stationär gehalten wird, lässt sich die Position des Messkopfes 26 zusammen mit der ersten Kamera 34 verändern. Die erste Kamera 36 lässt sich somit über das gehaltene Werkzeug hinweg verschieben. Der Messkopf 26 ist zu diesem Zweck gleitend auf der Oberfläche der Referenzplatte 16 gelagert. Diese gleitende Lagerung wird durch ein Luftpolster ermöglicht, das auf der Oberfläche der Referenzplatte 16 erzeugt wird. Es erfolgt also eine berührungslose Lagerung des Messkopfes 26, dessen Fuß 28 und seiner Unterseite sich dicht über der Oberfläche der Referenzplatte 16 befindet. Der Messkopf 26 kann daher ohne größeren Kraftaufwand und ohne Einwirkung von Kipp- oder Biegemomenten von einer Position auf der Oberfläche der Referenzplatte 16 in eine andere bewegt werden und frei über die Referenzplatte 16 geführt werden.

Diese Führung des Messkopfes 26 kann beispielsweise von Hand erfolgen, wie es bei der vorliegenden Ausführungsform der Vorrichtung 10 der Fall ist, oder der Messkopf 26 kann wahlweise mit einem eigenen Antrieb ausgestattet sein. Hingegen ist der Messkopf 26 nicht durch mechanische Aufhängungen oder dergleichen, die eine Kraft auf den Messkopf 26 übertragen oder ihn in einer Position auf der Referenzplatte 16 halten, mit dem Rest der Vorrichtung 10 verbunden. Der Messkopf 26 stellt damit eine separate Funktionseinheit der Vorrichtung 10 dar, die mit dem Rest der Vorrichtung 10 allenfalls durch Versorgungs- oder Datenkabel verbunden ist, die die Beweglichkeit des Messkopfes 26 über die Referenzplatte 16 hinweg nicht behindern.

Diese Versorgungsleitungen können auch eine Luftzuführungsleitung umfassen, um den Messkopf 26 mit Druckluft von einer externen Quelle zu versorgen. Denkbar ist allerdings, eine ausreichend starke und dauerhafte Druckluftquelle in den Fuß 28 des Messkopfes 26 zu integrieren. Ist der Messkopf 26 außerdem mit einer eigenen Energiequelle und Mitteln zur drahtlosen Kommunikation mit den übrigen Teilen der Vorrichtung 10 ausgestattet, steht der Messkopf 26 völlig frei auf der Referenzplatte 16 und seine Handhabung und Bewegbarkeit wird nicht durch Zuleitungen behindert.

Bei dem vorstehend genannten eigenen Antrieb kann es sich insbesondere auch um einen Friktionsantrieb handeln, wie etwa ein Reibrad oder mehrere Reibräder, die an der Unterseite des Fußes 28 angebracht sind. Hierdurch kann der Messkopf 26 sich eigenständig über die Referenzplatte 16 hinweg bewegen und auch eine Drehbewegung ausführen und muss nicht von Hand verschoben werden. Die Ansteuerung des Messkopfes 26 kann über eine Fernsteuerung erfolgen, die eine manuelle Steuereinrichtung wie etwa einen Joystick oder einen berührungsempfindlichen Bildschirm umfasst. In diese Steuereinrichtung werden von Hand Steuerbefehle eingegeben, etwa in üblicher Weise durch Kippen und/oder Drehen des Joysticks oder durch Gesten auf dem berührungsempfindlichen Bildschirm. Die so empfangenen Steuerbefehle werden dann durch geeignete Mittel an den Messkopf 26 übertragen. Diese Übertragung kann wiederum drahtgebunden oder auch drahtlos erfolgen.

Zur kabellosen Datenübertragung können auch Lichtsignale verwendet werden. Hierzu kann der Messkopf 26 mit einer Lichtquelle als Sender ausgestattet sein, die Licht an einen Sensor als Empfänger überträgt, der statisch am Rand der Referenzplatte 16 installiert ist. Zur Ausrichtung der Lichtquelle auf den Sensor können geeignete Mittel wie etwa Spiegel oder dergleichen verwendet werden oder die Lichtquelle strahlt das Signal als Rundumlicht in einem Winkel von 360° um den Messkopf 26 herum ab, so dass sich eine Ausrichtung auf einen Empfänger erübrigt.

Es kommt ferner in Betracht, den Messkopf 26 mit Sensoren zur berührungslosen Abstandsmessung auszustatten, die beispielsweise einen seitlichen Abstand von den Tischgrenzen oder einen Abstand vom Werkzeug bzw. dem Werkzeughalter 12 zu bestimmen, um Kollisionen zu vermeiden. Dies kann gerade bei der ferngesteuerten Bewegung des Messkopfes 26 sinnvoll sein.

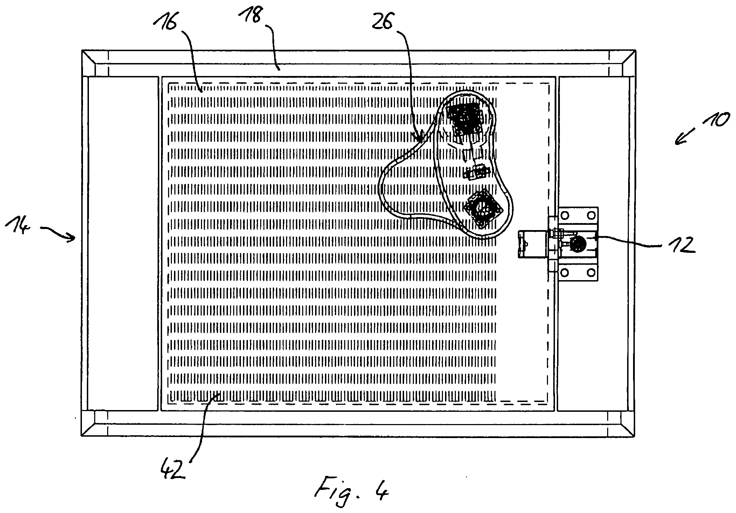

Die Position des Messkopfes 26 auf der Referenzplatte 16 wird durch einen geeigneten Positionsaufnehmer festgestellt. Bei der vorliegenden Ausführungsform ist dieser Positionsaufnehmer als zweite Kamera 40 ausgebildet, die in die Säule 30 integriert ist. Der Blickwinkel dieser zweiten Kamera 40 ist nach unten entlang der Achse der Säule 30 gerichtet, und die zweite Kamera 40 kann durch einen offenen unteren Boden der Säule 30 die Referenzplatte 16 abbilden. Zur Positionsermittlung ist die Referenzplatte 16 mit optisch wahrnehmbaren Markierungen 42 (siehe Fig. 4) versehen, die sich mit Hilfe der zweiten Kamera 40 abbilden lassen. Bei den Markierungen 42 handelt es sich um ein Strichmuster oder um ein Gittermuster, das derart kodiert ist, dass sich aus einer einzigen Abbildung der zweiten Kamera 40 die Position des Messkopfes 26 auf der Oberfläche der Referenzplatte 16 absolut ermitteln lässt, ohne dass ein Vergleich zu weiteren Abbildungen erforderlich ist. Das heißt, dass das Muster der optischen Markierungen 42 derart ausgebildet ist, dass jede Abbildung eine vollständige Ortsinformation beinhaltet. Das Bildverarbeitungssystem kann somit aus der Abbildung der zweiten Kamera 40 die X-Koordinate und die Y-Koordinate der Positionen des Messkopfes 26 auf der Referenzplatte 16 ermitteln. Darüber hinaus kann auch der Drehwinkel des Messkopfes 26 um eine vertikale Achse senkrecht zur Oberflächenebene der Referenzplatte 16 ermittelt werden. Auch hierzu ist das Muster der optischen Markierungen 42 geeignet kodiert. Denkbar ist beispielsweise, ein Gitterraster zu verwenden, dessen Rasterung in jeder Koordinatenrichtung durchgezählt ist und die laufende Position dieser Zählung aus der Abbildung der zweiten Kamera 40 erfassbar ist.

Der Messkopf 26 ist somit parallel zu einer Referenzebene R beweglich, die durch die Referenzplatte 16 definiert wird. Die Position des Messkopfes 26 auf der Referenzebene R sowie der Drehwinkel des Messkopfes 26 um eine Achse senkrecht zur Referenzebene R lassen sich erfindungsgemäß durch die Abbildung der optischen Markierungen 42 in der Referenzebene R durch die zweite Kamera 40 ermitteln.

In den Fuß des Messkopfes 26 können auch mehrere Positionsaufnehmer integriert sein, die die Messung des Drehwinkels des Messkopfes 26 um die senkrechte Achse erleichtern. Ferner kann der Messkopf 26 mit einem zusätzlichen Richtungsgeber für eine Absolutmessung seiner Drehwinkelposition ausgestattet sein, etwa nach Art eines Kompasses, der die Ausrichtung des Messkopfes 26 über der Referenzebene R bestimmt. Dies kann die Handhabung des Messkopfes erleichtern, da der Richtungsgeber die Information über den Rotationszustand gegebenenfalls schneller ermitteln und dem Anwender anzeigen kann, als es mit Hilfe optischer Positionsaufnehmer geschieht. Für diese Anwendung kommt beispielsweise ein Magnetometer als digitaler Kompass in Betracht.

Grundsätzlich ist es allerdings möglich, ein kollisionsfreies Verfahren des Messkopfes 26 auf der Referenzplatte 16 mit Hilfe der Kamera 40 zu ermöglichen. Diese Kamera 40 kann die Position und die Drehlage des Messkopfes 26 ermitteln, so dass aus den Abmessungen der Glasplatte und des Fußes des Messkopfes 26 die Gefahr einer Kollision erkannt werden kann. Dies kann durch eine Software ermittelt werden, die einen vorgegebenen mathematischen Algorithmus verwendet.

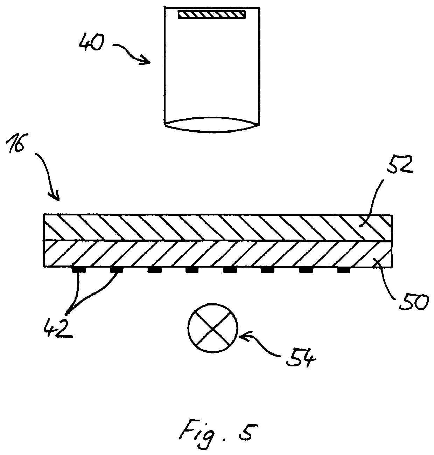

Die Referenzplatte 16 ist gemäß Fig. 5 aus zwei aufeinanderliegenden Teilplatten 50, 52 aus Glas zusammengesetzt. Die untere dieser beiden Teilplatten ist eine Markierungsplatte 50, die auf einer ihrer Seiten die optischen Markierungen 42 trägt. Die Markierungsplatte 50 ist durch eine transparente Schutzplatte 52 abgedeckt, die ebenfalls aus Glas besteht. Auf der Oberseite der Schutzplatte 52 kann der Fuß 28 des Messkopfes 26 frei gleiten. Die Fertigung dieser beiden Teilplatten 50, 52 der Referenzplatte 16 aus Glas trägt zur Positionierungsgenauigkeit der Vorrichtung 10 bei, da Glas einen sehr niedrigen thermischen Ausdehnungskoeffizienten besitzt. Unterhalb der Referenzplatte 16 ist eine Lichtquelle 54 zur Durchleuchtung der Referenzplatte 16 angeordnet, so dass die Markierungen 42 im Durchlichtverfahren durch die zweite Kamera 40 aufgenommen werden können. Die Teilplatten 50, 52 können aus einem porösen Material bestehen, so dass sie für einen leichten Luftstrom zur Erzeugung des Luftpolsters durchlässig sind. Denkbar ist auch die Anbringung von Düsen in der Referenzplatte 16 zur Erzeugung des Luftpolsters.

Etwa auf halber Höhe ist in die Säule 30 (siehe Fig. 1 und 2) eine dritte Kamera 44 integriert, die dazu dient, das Werkzeug seitlich im Auflichtverfahren abzubilden und somit seine Drehmitte zu ermitteln. Die optische Achse dieser dritten Kamera 44 steht senkrecht zur optischen Achse der ersten Kamera 34 und schneidet diese. Die dritte Kamera 44 kann höhenverstellbar in der Säule 30 angeordnet sein. Aufgrund der freien Positionierbarkeit des Messkopfes 26 bezüglich des Werkzeugs kann die Perspektive der dritten Kamera 44 relativ frei gewählt werden.

Ein in die Aufnahme 24 des Werkzeughalters 12 eingespanntes Werkzeug lässt sich somit vermessen, indem der Messkopf 26 über das Luftpolster auf der Referenzplatte 16 in eine Position geschoben wird, in der das Werkzeug sich im Blickfeld der ersten Kamera 34, d. h. im wesentlichen auf der optischen Achse dieser ersten Kamera 34 zwischen derselben und der Lichtquelle 36 befindet und gleichzeitig nach Möglichkeit von der dritten Kamera 44 abbildbar ist. Die Daten dieser Abbildungen lassen sich dann in Beziehung mit den Positionsdaten setzen, die aus der Abbildung der optischen Markierungen 42 durch die zweite Kamera 40 ermittelt wurden. Das Führen des Messkopfes 26 in diese Messposition geschieht unter minimalem Kraftaufwand durch Verschieben auf der Oberfläche der Referenzplatte 16, ohne dass Biege- oder Kippmomente auf den Messkopf 26 ausgeübt werden.

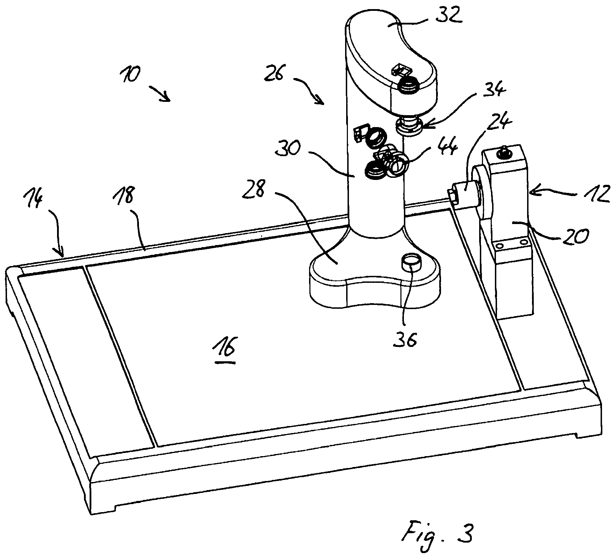

In der perspektivischen Ansicht in Fig. 3 ist zu erkennen, dass die Beweglichkeit des Messkopfes 26 auf der rechteckigen Oberfläche der Referenzplatte 16 durch den rechteckigen Rahmen 18 des Tisches 14 begrenzt wird. An den Rändern der Referenzplatte 16 stößt der Fuß 28 des Messkopfes 26 an den Rahmen 18 an, so dass eine Bewegung des Messkopfes 26 über die Fläche der Referenzplatte 16 hinaus verhindert wird.

Fig. 4 zeigt das Muster der optischen Markierungen 42 zur Ermittlung der Position des Messkopfes 26 und den Messkopf 26 selbst sowie den Werkzeughalter 12 in der Draufsicht.

Abweichend von der hier dargestellten Ausführungsform der Vorrichtung 10 kann der Messkopf 26 auch über einen eigenen Antrieb verfügen, der es ihm gestattet, sich selbsttätig über die Oberfläche der Referenzplatte 16 hinweg zu bewegen. Dieser Antrieb kann optional an- oder abschaltbar sein, um nach Bedarf auch eine freie Führung des Messkopfes 26 per Hand zu gewährleisten. Ein geeigneter Antrieb ist beispielsweise ein planarer Reluktanzmotor, dessen Läufer den Messkopf 26 bildet oder in den Fuß 28 des Messkopfes 26 integriert ist. Die Referenzplatte 16 bildet dann die Statorplatte dieses Reluktanzmotors. Statt optischer Markierungen bilden dann die Oberflächenzahnungen der Statorplatte die Markierungen zur Positionsermittlung durch den Läufer. Eine Positionierung ist dann mit hoher Genauigkeit möglich. Es versteht sich, dass verschiedene Verfahren zur Positionsermittlung bei Bedarf miteinander zu kombinieren sind, d. h. beispielsweise eine Ermittlung der Position anhand der Statorzahnung im Fall einer Ausbildung des Messkopfes 26 als Läufer eines planaren Reluktanzmotors, und die Anbringung optischer Markierungen, die durch eine Kamera zur Positionsermittlung abgebildet werden.

## Patentansprüche

1. Vorrichtung (10) zum Vermessen und/oder Einstellen eines Werkzeugs,
mit einer Referenzplatte (16), die in einer Referenzebene (R) liegt und optische Markierungen (42) aufweist,
einer auf das Werkzeug zu richtenden ersten Kamera (34), die von einem Messkopf (26) getragen wird, der bezüglich des Werkzeugs parallel zur Referenzebene (R) beweglich ist,
und einem am oder im Messkopf (16, 42) angebrachten Positionsaufnehmer zur Ermittlung der Position des Messkopfs (26) bezüglich der Referenzplatte (16),
**dadurch gekennzeichnet,**
**dass** der Messkopf (26) auf einer Oberfläche der Referenzplatte (16) gleitend gelagert ist,
**dass** die Referenzplatte (16) eine horizontale Referenzebene (R) definiert, über welche der Messkopf (26) frei führbar ist, und
der Positionsaufnehmer als zweite Kamera (40) zur Aufnahme der optischen Markierungen (42) zur Ermittlung der Position des Messkopfes (26) auf der Referenzebene (R) ausgebildet ist.

2. Vorrichtung gemäß Anspruch 1, **dadurch gekennzeichnet, dass** der Messkopf (26) auf einem Luftpolster auf der Referenzplatte (16) gelagert ist.

3. Vorrichtung gemäß Anspruch 1 oder 2, **dadurch gekennzeichnet, dass** der Messkopf (26) auf der Oberseite der Referenzplatte (16) bzw. einem darauf ausgebildeten Luftpolster steht.

4. Vorrichtung gemäß einem der Ansprüche 1 bis 3, **dadurch gekennzeichnet, dass** der Messkopf (26) etwa säulenförmig ausgebildet ist und einen auf der Oberfläche der Referenzplatte (16) gleitenden Fuß (28) umfasst, und dass die optische Achse der ersten Kamera (34) etwa senkrecht zur Oberfläche der Referenzplatte (16) steht.

5. Vorrichtung gemäß einem der Ansprüche 1 bis 5, **dadurch gekennzeichnet, dass** der Messkopf (26) von Hand über die Referenzplatte (16) führbar ist.

6. Vorrichtung gemäß einem der Ansprüche 1 bis 6, **dadurch gekennzeichnet, dass** der Messkopf (26) über einen eigenen Antrieb zur Bewegung über die Referenzplatte (16) verfügt.

7. Vorrichtung gemäß Anspruch 6, **dadurch gekennzeichnet, dass** der Antrieb als Friktionsantrieb an der Unterseite des Messkopfes (26) vorgesehen ist.

8. Vorrichtung gemäß einem der vorhergehenden Ansprüche, **gekennzeichnet durch** eine Fernsteuerung zum Führen eines Messkopfes (26) über die Referenzplatte (16), welche eine manuelle Steuereinrichtung zur Eingabe von Steuerbefehlen und Mittel zur Übertragung der Steuerbefehle an den Messkopf (26) umfasst.

9. Vorrichtung gemäß einem der vorhergehenden Ansprüche, **dadurch gekennzeichnet, dass** die zweite Kamera (40) zur Abbildung der optischen Markierungen (42) im Durchlichtverfahren vorgesehen ist.

10. Vorrichtung gemäß einem der vorhergehenden Ansprüche, **dadurch gekennzeichnet, dass** die zweite Kamera dazu vorgesehen ist, eine Drehposition des Messkopfes (26) um eine Achse senkrecht zur Referenzebene (R) anhand der optischen Markierungen (42) der Referenzplatte (16) zu ermitteln.

11. Vorrichtung gemäß einem der vorhergehenden Ansprüche, **dadurch gekennzeichnet, dass** die Referenzplatte (16) zumindest zwei aufeinander geschichtete Teilplatten (50, 52) umfasst, nämlich eine Markierungsplatte (50), die die optischen Markierungen (42) trägt, und eine transparente Schutzplatte (52), die die Markierungsplatte (50) abdeckt.

12. Vorrichtung gemäß einem der vorhergehenden Ansprüche, **dadurch gekennzeichnet, dass** der Messkopf (26) einem Richtungsgeber zur Absolutmessung seiner Drehwinkelposition umfasst.

13. Vorrichtung gemäß einem der vorhergehenden Ansprüche, **dadurch gekennzeichnet, dass** der Messkopf (26) als Läufer eines planaren Reluktanzmotors ausgebildet ist, und dass die Referenzplatte (16) als Statorplatte dieses Reluktanzmotors ausgebildet ist.

14. Vorrichtung gemäß einem der vorhergehenden Ansprüche, **gekennzeichnet durch** eine dritte Kamera (44), die im Messkopf (26) höhenverstellbar über der Referenzplatte (16) angeordnet ist.

## Claims

1. Apparatus (10) for measuring and/or adjusting a tool,
having a reference plate (16), which is situated in a reference plane (R) and has optical marks (42),
a first camera (34) that is to be directed at the tool and is carried by a measurement head (26) that is movable parallel to the reference plane (R), relative to the tool,
and a position sensor, attached to or in the measurement head (16, 42), for ascertaining the position of the measurement head (26) relative to the reference plate (16),
**characterized**
**in that** the measurement head (26) is supported in a gliding manner on a surface of the reference plate (16), in that the reference plate (16) defines a horizontal reference plane (R), over which the measurement head (26) is freely guidable, and
the position sensor is designed in the form of a second camera (40) for recording the optical marks (42) to ascertain the position of the measurement head (26) on the reference plane (R).

2. Apparatus according to Claim 1, **characterized in that** the measurement head (26) is supported on an air cushion on the reference plate (16).

3. Apparatus according to Claim 1 or 2, **characterized in that** the measurement head (26) is located on the upper side of the reference plate (16) or on an air cushion formed thereon.

4. Apparatus according to any one of Claims 1 to 3, **characterized in that** the measurement head (26) is approximately column-shaped and comprises a foot (28) gliding on the surface of the reference plate (16), and **in that** the optical axis of the first camera (34) is approximately perpendicular to the surface of the reference plate (16).

5. Apparatus according to any one of Claims 1 to 5, **characterized in that** the measurement head (26) is guidable by hand over the reference plate (16).

6. Apparatus according to any one of Claims 1 to 6, **characterized in that** the measurement head (26) has a dedicated drive for the movement over the reference plate (16) .

7. Apparatus according to Claim 6, **characterized in that** the drive is provided as a friction drive on the lower side of the measurement head (26).

8. Apparatus according to any one of the preceding claims, **characterized by** a remote control for guiding a measurement head (26) over the reference plate (16), which comprises a manual control device for inputting control commands and means for transmitting the control commands to the measurement head (26).

9. Apparatus according to any one of the preceding claims, **characterized in that** the second camera (40) is provided for imaging the optical marks (42) in a transmitted-light method.

10. Apparatus according to any one of the preceding claims, **characterized in that** the second camera is provided to ascertain a rotational position of the measurement head (26) about an axis perpendicular to the reference plane (R) using the optical marks (42) of the reference plate (16).

11. Apparatus according to any one of the preceding claims, **characterized in that** the reference plate (16) comprises at least two partial plates (50, 52) that are placed one on top of the other, specifically a mark plate (50) carrying the optical marks (42) and a transparent protective plate (52) covering the mark plate (50).

12. Apparatus according to any one of the preceding claims, **characterized in that** the measurement head (26) comprises a direction sensor for the absolute measurement of its rotation angle position.

13. Apparatus according to any one of the preceding claims, **characterized in that** the measurement head (26) is designed in the form of a rotor of a planar reluctance motor, and **in that** the reference plate (16) is designed in the form of a stator plate of said reluctance motor.

14. Apparatus according to any one of the preceding claims, **characterized by** a third camera (44), which is arranged so as to be height-adjustable in the measurement head (26) above the reference plate (16).

## Revendications

1. Dispositif (10) permettant de mesurer et/ou de régler un outil, comprenant
une plaque de référence (16) qui est située dans un plan de référence (R) et présente des repères optiques (42),
une première caméra (34) à pointer sur l'outil et qui est portée par une tête de mesure (26) qui est mobile par rapport à l'outil parallèlement au plan de référence (R),
et un capteur de position placé sur ou dans la tête de mesure (16, 42) pour déterminer la position de la tête de mesure (26) par rapport à la plaque de référence (16),
**caractérisé en ce que**
la tête de mesure (26) est montée coulissante sur une surface de la plaque de référence (16),
la plaque de référence (16) définit un plan de référence (R) horizontal sur lequel la tête de mesure (26) peut être guidée librement, et
le capteur de position est réalisé sous la forme d'une deuxième caméra (40) permettant d'enregistrer les repères optiques (42) afin de déterminer la position de la tête de mesure (26) sur le plan de référence (R).

2. Dispositif selon la revendication 1, **caractérisé en ce que** la tête de mesure (26) est montée sur des coussins d'air sur la plaque de référence (16).

3. Dispositif selon la revendication 1 ou 2, **caractérisé en ce que** la tête de mesure (26) est posée sur la face supérieure de la plaque de référence (16) ou sur un coussin d'air réalisé sur celle-ci.

4. Dispositif selon l'une quelconque des revendications 1 à 3, **caractérisé en ce que** la tête de mesure (26) est réalisée approximativement en forme de colonne et comprend un pied (28) coulissant à la surface de la plaque de référence (16), et **en ce que** l'axe optique de la première caméra (34) est approximativement perpendiculaire à la surface de la plaque de référence (16) .

5. Dispositif selon l'une quelconque des revendications 1 à 5, **caractérisé en ce que** la tête de mesure (26) peut être guidée manuellement sur la plaque de référence (16).

6. Dispositif selon l'une quelconque des revendications 1 à 6, **caractérisé en ce que** la tête de mesure (26) dispose de son propre dispositif d'entraînement pour se déplacer sur la plaque de référence (16).

7. Dispositif selon la revendication 6, **caractérisé en ce que** le dispositif d'entraînement est prévu sous la forme d'un dispositif d'entraînement à friction sur la face inférieure de la tête de mesure (26).

8. Dispositif selon l'une quelconque des revendications précédentes, **caractérisé par** une télécommande permettant de guider une tête de mesure (26) sur la plaque de référence (16) et qui comprend un dispositif de commande manuel pour entrer des instructions de commande et des moyens pour transmettre les instructions de commande à la tête de mesure (26).

9. Dispositif selon l'une quelconque des revendications précédentes, **caractérisé en ce que** la deuxième caméra (40) est prévue pour représenter les repères optiques (42) par un procédé par transparence.

10. Dispositif selon l'une quelconque des revendications précédentes, **caractérisé en ce que** la deuxième caméra est prévue pour déterminer une position de rotation de la tête de mesure (26) autour d'un axe perpendiculaire au plan de référence (R) à l'aide des repères optiques (42) de la plaque de référence (16).

11. Dispositif selon l'une quelconque des revendications précédentes, **caractérisé en ce que** la plaque de référence (16) comprend au moins deux plaques partielles (50, 52) empilées l'une sur l'autre, notamment une plaque de repères (50) qui porte les repères optiques (42), et une plaque de protection transparente (52) qui recouvre la plaque de repères (50).

12. Dispositif selon l'une quelconque des revendications précédentes, **caractérisé en ce que** la tête de mesure (26) comprend un indicateur de direction pour la mesure absolue de sa position d'angle de rotation.

13. Dispositif selon l'une quelconque des revendications précédentes, **caractérisé en ce que** la tête de mesure (26) est réalisée sous la forme d'un rotor d'un moteur à réluctance planaire, et **en ce que** la plaque de référence (16) est réalisée sous la forme d'une plaque de stator de ce moteur à réluctance.

14. Dispositif selon l'une quelconque des revendications précédentes, **caractérisé par** une troisième caméra (44) qui est disposée de manière réglable en hauteur dans la tête de mesure (26) au-dessus de la plaque de référence (16).
